# EUROPEAN PATENT APPLICATION

(11) **EP 3 842 821 A1**
(43) Date of publication of application: **30.06.2021**
(21) Application number: 20217085.8
(22) Date of filing: 23.12.2020
(51) Int. Cl.: G01S 7/00, G01S 7/02

(54) **SYSTEM AND METHOD FOR VERY LOW FREQUENCY AND LOW FREQUENCY TRANSMITTER NAVIGATION**

(30) Priority: 23.12.2019 US 201916725817
(71) Applicant: Rockwell Collins, Inc., Cedar Rapids, IA 52498 (US)
(72) Inventor: BOX, Jeffrey L., Farmersville, TX Texas 75442 (US); CUNNINGHAM, John, Richardson, TX Texas 75082 (US)
(74) Representative: Dehns

(57) **Abstract**

A navigation system is disclosed. In embodiments, the navigation system includes one or more transmitting devices (102) configured to generate one or more transmission signals (101) by performing one or more frequency-modulation operations on a carrier signal to encode communication data onto the carrier signal, and performing one or more amplitude-modulation operations on the carrier signal to encode navigational data onto the carrier signal. In embodiments, the one or more transmitting devices are further configured to transmit the one or more transmission signals to one or more receiving devices (110), wherein a receiving device of the one or more receiving devices is configured to extract the navigational data from the one or more transmission signals and determine a position of the receiving device based at least in part on the extracted navigational data.

## Description

### BACKGROUND

Global Positioning System (GPS) navigation systems have become a crucial component to a wide variety of fields and operations, including commercial transport operations, military operations, and the like. However, even with the large dependence upon GPS navigation, there is a possibility that GPS navigation systems may be disabled and/or destroyed. In particular, enemies may be able to disable GPS navigation during times of conflict. Accordingly, there exists a need in the art for a system and method which is able to facilitate the transmission of navigational information in the absence of GPS capabilities.

### SUMMARY

A navigation system is disclosed. In embodiments, the navigation system includes one or more transmitting devices configured to generate one or more transmission signals by performing one or more frequency-modulation operations on a carrier signal to encode communication data onto the carrier signal, and performing one or more amplitude-modulation operations on the carrier signal to encode navigational data onto the carrier signal. In embodiments, the one or more transmitting devices are further configured to transmit the one or more transmission signals to one or more receiving devices, wherein a receiving device of the one or more receiving devices is configured to extract the navigational data from the one or more transmission signals and determine a position of the receiving device based at least in part on the extracted navigational data.

In some embodiments of the navigation system, performing the one or more amplitude-modulation operations on the carrier signal to encode navigational data onto the carrier signal includes selectively modifying an amplitude of the carrier signal with one or more driver circuits of the one or more transmitting devices.

In some embodiments of the navigation system, performing the one or more amplitude-modulation operations on the carrier signal to encode navigational data onto the carrier signal includes selectively modifying an amplitude of the carrier signal with an antenna matching network of the one or more transmitting devices.

In some embodiments of the navigation system, selectively modifying an amplitude of the carrier signal with an antenna matching network of the one or more transmitting devices includes selectively activating an attenuator of the antenna matching network to selectively modify the amplitude of the carrier signal, or selectively detuning the one or more transmitting devices with the antenna matching network to selectively modify the amplitude of the carrier signal.

In some embodiments of the navigation system, transmitting the one or more transmission signals includes transmitting the one or more transmission signals at a frequency in the range of 3-300 kHz.

In some embodiments of the navigation system, the one or more frequency-modulation operations include a minimum-shift keying (MSK) modulation operation.

In some embodiments of the navigation system, the navigational data includes time-of-transmit values of the one or more transmission signals.

In some embodiments of the navigation system, the navigational data further includes at least one of positional data of the one or more transmitting devices, an operational mode of the one or more transmitting devices, or Global Positioning System (GPS) almanac data.

In some embodiments of the navigation system, the one or more amplitude-modulation operations are performed on an envelope of a modulated carrier signal generated via the one or more frequency-modulation operations.

In some embodiments of the navigation system, the one or more frequency-modulation operations are performed on an envelope of a modulated carrier signal generated via the one or more amplitude-modulation operations.

In some embodiments of the navigation system, the navigational data is encoded onto the carrier signal via one or more encryption operations.

In some embodiments of the navigation system, the communication data is encoded at a rate between 100-300 bits per second (BPS), the navigational data is encoded at a rate between 0.1-1 BPS.

In some embodiments of the navigation system, the one or more transmitting devices include a fleet submarine broadcast system (FSBS) transmitter.

In some embodiments of the navigation system, the one or more transmitting devices are further configured to: identify one or more control signals indicative of a communication-only operational state; and terminate the one or more amplitude-modulation operations in response to the one or more identified control signals, wherein the one or more transmission signals transmitted during the communication-only operational state do not include the navigational data.

A navigational method is disclosed. In embodiments, the navigational method includes: performing one or more frequency-modulation operations on a carrier signal to encode communication data onto the carrier signal; performing one or more amplitude-modulation operations on the carrier signal to encode navigational data onto the carrier signal; transmitting one or more transmission signals to one or more receiving devices, the one or more transmission signals including the encoded navigational data and the encoded communication data; receiving the one or more transmission signals with a receiving device of the one or more receiving devices; extracting the navigational data from the one or more transmission signals; and determining a position of the receiving device of the one or more receiving devices based at least in part on the extracted navigational data.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are provided for example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a navigation system, in accordance with one or more embodiments of the present disclosure.
FIG. 2 illustrates a flowchart of a navigational method, in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

Global Positioning System (GPS) navigation systems have become a crucial component to a wide variety of fields and operations, including commercial transport operations, military operations, and the like. However, even with the large dependence upon GPS navigation, there is a remote possibility that GPS navigation systems may be disabled and/or destroyed. In particular, enemies may be able to disable GPS navigation during times of conflict.

Very low frequency (VLF) and low frequency (LF) communication systems (hereinafter generally referred to as VLF/LF communication systems) have been explored as one potential navigational solution to "the day without GPS." One specific example of a VLF/LF communication system is the U.S. Navy's Fleet Submarine Broadcast System (FSBS). The FSBS consists of nine high-powered VLF/LF shore stations (e.g., VLF/LF transmitters) positioned around the world which are configured to transmit communication signals over the VLF/LF frequency range. The FSBS transmitters typically exhibit transmit powers from 100 kW to 2 MW, and transmit communication data over the VLF/LF communication channel at rate of approximately 200 bits per second using minimum shift keying (MSK) modulation. These FSBS transmitters are able to transmit a communication data stream via VLF/LF signals across the globe.

FSBS transmitters were initially designed only to support communications within the system, and were therefore not intended to support navigational efforts. In order to support navigational efforts, a transmitter must be configured to encode certain navigational data within the transmitted signals in order to facilitate a navigational solution at the receiving devices. Navigational data which may be encoded to facilitate navigational solutions may include, in a most basic form, time values (e.g., time-of-transmit) which may be used at a receiving device to calculate range from the transmitter. More complex navigational systems (e.g., GPS) may include additional navigational data to further facilitate navigational solutions.

Accordingly, while existing FSBS transmitters are highly effective in distributing communication data via VLF/LF signals, they are of limited usefulness from a navigational perspective. However, if a navigational channel could be added to the communication channel of the VLF/LF signals, these existing FSBS transmitters may be retrofitted to support navigational solutions.

Accordingly, embodiments of the present disclosure are directed to a system and method which cure one or more of the shortfalls of previous approaches identified above. In particular, embodiments of the present disclosure are directed to a system and method which is able to facilitate the transmission of navigational information in the absence of GPS capabilities. Embodiments of the present disclosure are directed to adding a navigational channel to existing communication channels transmitted using VLF/LF signals. By implementing amplitude-modulation operations on VLF/LF signals including communication data, embodiments of the present disclosure may enable the transmission of navigational data through existing and/or retrofitted communication systems. Further, the addition of the navigation data will not impact the operation of existing communications receivers or their ability to receive the communications data.

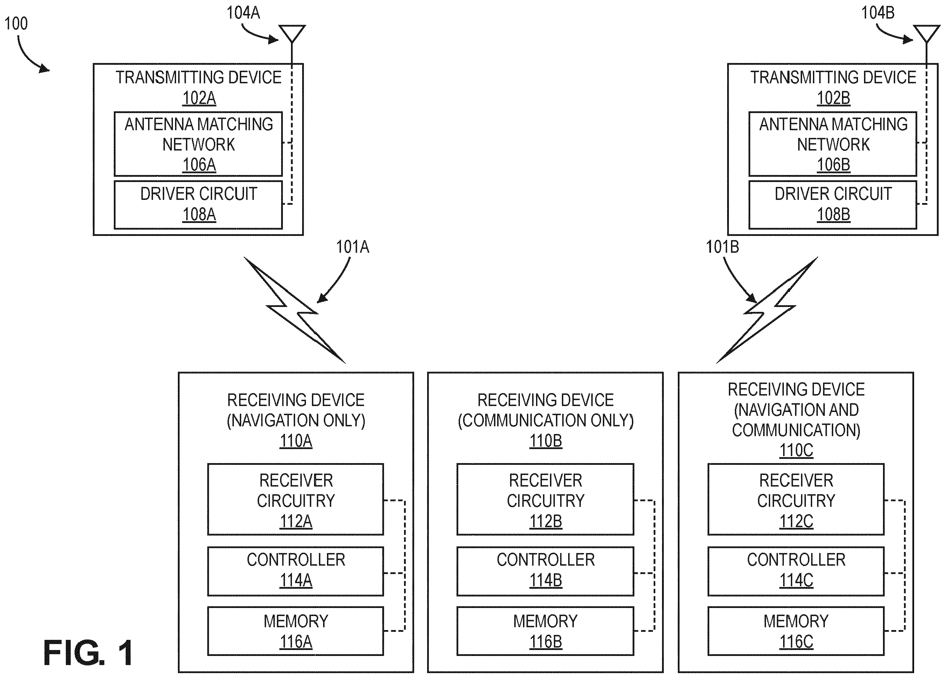

FIG. 1 illustrates a navigation system 100, in accordance with one or more embodiments of the present disclosure. The navigation system 100 may include, but is not limited to, one or more transmitting devices 102a, 102b and one or more receiving devices 110a, 110b, 110c. It is contemplated herein that the navigation system 100 may be configured to facilitate navigational solutions by distributing navigational data which may be used by the receiving devices 110a, 110b, 110c to determine a location/position of one or more of the receiving devices 110.

In embodiments, the one or more transmitting devices 102a, 102b may include an antenna 104a, 104b, a matching network 106a, 106b, and a driver circuit 108a, 108b. The one or more transmitting devices 102a, 102b may further include a controller including one or more processors and a memory, and a user interface device communicatively coupled to the various components of the transmitting devices 102a, 102b. It is contemplated herein that the one or more transmitting devices 102a, 102b may include any transmitting devices known in the art. For example, the one or more transmitting devices 102a, 102b may include VLF/LF transmitters. For instance, the one or more transmitting devices 102a, 102b may include FSBS transmitters.

In embodiments, the one or more transmitting devices 102a, 102b may be configured to generate one or more transmission signals 101a, 101b, and transmit the one or more transmission signals 101a, 101b to the one or more receiving devices 110a, 110b, 110c. The one or more transmission signals 101a, 101b may be transmitted over any frequency known in the art including, but not limited to, VLF/LF frequencies. For example, the transmitting devices 102a, 102b may be configured to transmit the transmission signals 101a, 101b at a frequency in the range of 3-300 kHz.

In embodiments, the one or more transmitting devices 102a, 102b may be configured to transmit both a communication data stream (e.g., communication data) and a navigational data stream (e.g., navigational data) via the one or more transmission signals 101a, 101b. In this regard, the one or more transmission signals 101a, 101b may include both a communication channel including communication data, and a navigational channel including navigational data.

In generating the one or more transmission signals 101a, 101b, the one or more transmitting devices 102a, 102b may be configured to perform one or more frequency-modulation operations on a carrier signal in order to encode communication data onto the carrier signal. For example, the transmitting devices 102a, 102b may be configured to perform one or more frequency-shift keying (FSK) modulation operations in order to encode communication data onto the carrier signal. For instance, in the context of FSBS transmitters (e.g., transmitting devices 102a, 102b), the FSBS transmitters may be configured to perform one or more minimum shift keying (MSK) modulation operations in order to encode communication data onto the carrier signal. It is noted herein that any frequency-modulation operations (e.g., constant-level modulation operations) known in the art may be used in order to encode communication data to a carrier signal.

In embodiments, the communication data may be encoded onto the carrier signal such that the communication data is encoded/transmitted at a rate between 100-300 bits per second (BPS). For example, as noted previously herein, in the context of FSBS transmitters (e.g., transmitting devices 102a, 102b), the FSBS transmitters may be configured to transmit communication data at a rate of approximately 200 BPS.

In embodiments, the one or more transmitting devices 102a, 102b may be further configured to add a navigational data stream (e.g., navigational channel) to the one or more transmission signals 101a, 101b in order to support navigational solutions at one or more of the receiving devices 110a, 110b, 110c. In embodiments, the one or more transmitting devices 102a, 102b may be configured to generate the transmission signals 101a, 101b by performing one or more amplitude-modulation operations on the carrier signal. The one or more amplitude-modulation operations may be performed in order to encode navigational data to the carrier signal.

As noted previously herein, the navigational data encoded into the transmission signals 101a, 101b may include a variety of types of navigational data which may be used by the receiving devices 110 to determine a navigational solution. For example, the navigational data encoded into the transmission signals 101a, 101b may include, but is not limited to, time-of-transmit values of the one or more transmission signals 101a, 101b. The time-of-transmit values may be indicative of a time in which the transmission signals 101a, 101b were transmitted, and may subsequently be used by one or more of the receiving devices 110a, 110b, 110c to determine a range from the transmitting devices 102a, 102b, and thereby support a determination of a position of one or more of the receiving devices 110a, 110b, 110c.

The navigational data encoded into the transmission signals 101a, 101b may include any other navigational data known in the art including, but not limited to, positional data of the one or more transmitting devices 101a, 101b, an operational mode of the one or more transmitting devices 102a, 102b, GPS almanac data, and the like. For example, both stationary and mobile transmitting devices 102a, 102b may be configured to transmit positional data of the respective transmitting devices 102a, 102b such that the receiving devices 110a, 110b, 110c, may determine a position of the receiving devices 110 relative to the known positions of the transmitting devices 102a, 102b.

It is contemplated herein that embodiments of the present disclosure may be implemented in the context of mobile transmitting devices 102a, 102b which may be configured to follow and/or surround designated areas or operations (e.g., fleet of military ships) in order to provide navigational capabilities in the event GPS systems are disabled or otherwise unavailable due to weather conditions, jamming, enemy intervention, and the like. In particular, mobile transmitting devices 102a, 102b may be implemented on ships, balloons, trailers, or the like, such that the mobile transmitting devices 102a, 102b may enable navigational solutions in areas requiring enhanced navigational capabilities.

The one or more transmitting devices 102a, 102b may be configured to transmit varying amounts of navigational data dependent upon the characteristics of the navigation system 100 and/or the importance of accurately/efficiently determining navigational solutions. Characteristics of the navigation system 100 which may at least partially determine the amount of navigational data encoded within the transmission signals 101a, 101b may include, but are not limited to, data traffic levels within the navigation system 100, priority of communication data, priority of navigational data, and the like. For instance, in cases where there is high data traffic levels and/or high priority placed on communication data, the one or more transmitting devices 102a, 102b may be configured to encode a minimum amount of navigational data into the transmission signals 101a, 101 b which is able to support a navigational solution. By way of another example, in cases where there is low data traffic levels and/or high priority placed on navigational data, the one or more transmitting devices 102a, 102b may be configured to encode additional navigational data into the transmission signals 101a, 101b in order to support a more efficient, accurate navigational solution.

In embodiments, the data rate of the navigational data may be dependent upon the amount of navigational data encoded within the transmission signals 101a, 101b. However, it is contemplated herein that the navigational data may be encoded within the transmission signals 101a, 101 b at a significantly lower rate than the communication data. For example, in some embodiments, the navigational data may be encoded within the carrier signal/transmission signals 101a, 101b at a rate of seconds-per-bit. For instance, in some embodiments, the navigational data may be encoded within the carrier signal/transmission signals 101a, 101b at a data rate between 0.1 BPS and 1 BPS.

In some embodiments, the one or more transmitting devices 102a, 102b may be configured to generate the transmission signals 101a, 101b including encoded navigational data by utilizing partial amplitude-modulation. The term "partial" amplitude modulation may be used throughout the present disclosure to refer to amplitude changes (modulation) which are limited to only a portion of a total amplitude of the transmission signals 101a, 101b. The implementation of partial amplitude modulation may ensure that there is sufficient amplitude at all times to allow the receiving devices 110 configured to receive the communication data stream (e.g., receiving devices 110b, 110c) to detect the frequency modulation components they are designed to search for. For example, the one or more transmitting devices 102a, 102b may be configured to encode navigational data onto the carrier signal/transmission signals 101a, 101b by modulating an amplitude of the carrier signal between 90% and 100% of the amplitude of the carrier signal.

For instance, as noted previously herein, embodiments of the present disclosure may be implemented into existing FSBS transmitters. Currently, the FSBS transmitters (e.g., transmitting devices 102a, 102b) are configured to transmit communication data via VLF/LF signals (e.g., transmission signals 101a, 101b) at a defined constant (or substantially constant) amplitude. In this example, the FSBS transmitters (e.g., transmitting devices 102a, 102b) may be modified and/or retrofitted to encode navigational data into the VLF/LF signals (e.g., transmission signals 101a, 101b) by modulating the amplitude of the VLF/LF signals (e.g., transmission signals 101a, 101b) between 90% and 100% of the defined constant amplitude of the VLF/LF signals. In this example, the amplitude of the VLF/LF signals (e.g., transmission signals 101a, 101b) may fluctuate between 90% and 100% of the defined constant amplitude every several seconds.

It is noted herein that the examples of partial amplitude modulation are not to be regarded as limiting, unless noted otherwise herein. In this regard, the transmitting devices 102a, 102b may be configured to implement partial amplitude modulation over any range of amplitudes. For instance, transmitting devices 102a, 102b may be configured to encode navigational data into the VLF/LF signals (e.g., transmission signals 101a, 101b) by modulating the amplitude of the VLF/LF signals (e.g., transmission signals 101a, 101b) between 70% and 100% of the defined constant amplitude of the VLF/LF signals, between 90% and 110% of the defined constant amplitude of the VLF/LF signals, and the like. It is noted herein, however, that damping the amplitude of VLF/LF signals to less than 100% (as opposed to amplifying them over 100%) may enable embodiments of the present disclosure to be implemented without requiring the addition of power-consuming components.

Furthermore, it is contemplated herein that small ranges of partial amplitude modulation (e.g., between 90% and 100% of an amplitude of the VLF/LF signals) may allow the navigational data to be covertly added into the VLF/LF signals (e.g., transmission signals 101a, 101b). In particular, receiving devices 110b which are not configured to be searching for the included navigational data may recognize the small partial amplitude modulations, but attribute the small fluctuations to noise, propagation level shifting, fading, or other factors. In this regard, by implementing partial amplitude modulation techniques, the transmitting devices 102a, 102b may be configured to encode navigational data into the transmission signals 101a, 101b in such a manner that the inclusion of the navigational data is not abundantly obvious to threat or enemy receiving devices.

In embodiments, the transmitting devices 102a, 102b may be configured to implement navigational data encoding via the one or more amplitude-modulation operations in such a manner as to not disrupt the communication channel of the transmission signals 101a, 101b. In particular, it is contemplated herein that FSBS transmitters and/or other existing VLF/LF transmitters may be modified and/or retrofitted to encode navigational data via amplitude-modulation operations without interfering with the existing communication data streams (communication channels). Therefore, in the context of FSBS transmitters, communication data encoded with MSK or FSK modulation may be carried out without suffering detrimental effects attributable to the addition of the navigational channel.

It is contemplated herein that the one or more transmitting devices 102a, 102b may be configured to carry out the amplitude-modulation operations through a number of techniques and/or components. For example, in some embodiments, the one or more transmitting devices 102a, 102b may be configured to selectively modify an amplitude of the carrier signal with the one or more driver circuits 108a, 108b in order to perform the one or more amplitude modulation operations to encode the navigational data onto the carrier signal. For instance, one or more amplifiers of the driver circuits 108a, 108b may be selectively modulated in order to perform the amplitude-modulation operations.

It is contemplated herein that driver circuits 108a, 108b of existing FSBS transmitters (e.g., transmitting devices 102a, 102b) may be modified directly in order to support the amplitude-modulation operations. By directly modifying one or more driver circuits 108a, 108b of existing FSBS transmitters and/or other VLF/LF transmitters, the transmitters may be adapted/retrofitted to perform the amplitude-modulation operations without significantly changing the transmission and/or reception architectures of the transmitting devices 102a, 102b and/or receiving devices 110. In this regard, it is contemplated that embodiments of the present disclosure may be implemented into existing communication systems (e.g., FSBS) without significant expenses, and without requiring a substantial overhaul of the existing system.

In additional and/or alternative embodiments, the one or more transmitting devices 102a, 102b may be configured to selectively modify an amplitude of the carrier signal with the antenna matching network 106a, 106b in order to perform the one or more amplitude-modulation operations to encode the navigational data onto the carrier signal. For example, the one or more transmitting devices 102a, 102b may be configured to selectively modify an amplitude of the carrier signal by selectively adjusting one or more components of the antenna matching network 106a, 106b. For instance, the one or more transmitting devices 102a, 102b may be configured to selectively modify an amplitude of the carrier signal by selectively activating an attenuator of the antenna matching network 106a, 106b. By way of another example, the one or more transmitting devices 102a, 102b may be configured to selectively modify one or more capacitors and/or one or more inductors of the antenna matching network 106a, 106b in order to detune the transmitting devices 102a, 102b, and thereby modify the amplitude of the carrier signal/ transmission signal 101a, 101b. in this regard, the antenna matching network 106a, 106b may be used to detune the transmitting devices 102a, 102b in order to implement amplitude-modulation of the carrier signal and/or transmission signals 101a, 101b.

It is noted herein that the addition of a navigational data stream (e.g., navigational channel) to the transmission signals 101a, 101b may be considered to be carried out by direct modulation of one or more un-modified carrier signals and/or indirectly via modulation of an envelope of modulated carrier signals. For example, in some embodiments, the one or more amplitude modulation operations may be performed directly on an un-modified (e.g., un-modulated) carrier signal). For instance, in some embodiments, amplitude-modulation operations may be performed on a carrier signal to encode navigational data onto the carrier signal prior to the frequency-modulation used to encode communication data onto the carrier signal. In this example, the one or more frequency-modulation operations may subsequently be performed on an envelope of the modulated carrier signal generated via the one or more amplitude-modulation operations.

Conversely, by way of another example, the one or more amplitude-modulation operations may be performed on a carrier signal which has been modulated via frequency-modulation operations in order to encode communication data. In this example, the one or more amplitude-modulation operations are performed on an envelope of a modulated carrier signal generated via the one or more frequency-modulation operations (e.g., FSK envelope, MSK envelope). Accordingly, performing amplitude-modulation operations on a carrier signal may include performing the amplitude-modulation operations directly on an un-modulated carrier signal and/or performing the amplitude-modulation operations on an envelope of a modulated carrier signal.

In embodiments, the one or more transmitting devices 102a, 102b may be configured to encrypt the navigational data and/or communication data encoded within the carrier signals/transmission signals 101a, 101b. The various encryption operations used to encode the navigational data may be the same and/or different from encryption operations used to encode communication data. For example, the one or more transmitting devices 102a, 102b may be configured to perform a first set of one or more encryption operations in order to encode communication data onto the carrier signal. The one or more transmitting devices 102a, 102b may be further configured to perform a second set of one or more encryption operations in order to encode navigational data onto the carrier signal, wherein the second set of one or more encryption operations are different from the first set of one or more encryption operations. In this regard, the communication data may be extracted/decrypted via a first encryption key, and the navigational data may be extracted/decrypted via a second encryption key which is different from the first encryption key. It is contemplated herein that the one or more transmitting devices 102a, 102b may be configured to perform any encryption operations known in the art.

It is contemplated herein that encrypting the communication data and/or navigational data via varying encryption operations may allow further security and control over who/what may be permitted to make use of communication data and/or navigational data within the navigation system 100. In particular, by encrypting navigational data encoded within transmission signals 101a, 101b, currently existing communication systems (e.g., FSBS) may be retrofitted to enable navigational solutions while simultaneously retaining the ability to restrict which receiving devices 110 are capable of utilizing the navigational data.

For example, as shown in FIG. 1, some receiving devices 110b may be enabled for communication only, such that they are only configured and/or authorized to receive the communication data stream. These may include current FSBS receivers which are not instructed to search for the navigational data stream, or who have not been provided encryption keys to make use of the navigational data stream. Conversely, there may be other receiving devices 110a which are enabled for navigation only, such that they are only configured/authorized to receive the navigational data stream. For instance, in embodiments where the communication data stream is encrypted, the receiving devices 110a enabled for navigation only may not hold encryption keys required to make use of the communication data stream. Finally, there may be other receiving devices 110c which are enabled for both communication and navigation. These receiving devices 110c may include FSBS receivers which have been retrofitted for navigational functionality, and may include encryption keys for both the communication data stream and the navigation data stream.

In embodiments, after generating the one or more transmission signals 101a, 101b, the one or more transmitting devices 102a, 102b may be configured to transmit the one or more transmission signals 101a, 101b to the one or more receiving devices 110a, 110b, 110c. As noted previously herein, the transmitting devices 102a, 102b may be configured to transmit the transmission signals 101a, 101b at a frequency in the range of 3-300 kHz. For instance, the transmitting devices 102a, 102b may be configured to transmit the transmission signals 101a, 101b at a frequency in the range of 14-30 kHz.

In embodiments, the one or more receiving devices 110a, 110b, 110c are configured to receive the one or more transmission signals 101a, 101b via receiver circuitry 112. The receiver circuitry 112 may include any receiver circuitry or network interface known in the art for receiving and/or transmitting signals including, but not limited to, antennas, receivers, transceivers, and the like.

In some embodiments, the one or more receiving devices 110 which are enabled and/or authorized for navigation (e.g., receiving devices 110a, 110c) are configured to extract navigational data encoded into the one or more transmission signals 101a, 101b and determine a position of the one or more receiving devices 110 based on, at least in part, the extracted navigational data. For example, a controller 114c of a receiving device 110c may be configured to receive the transmission signals 101a, 101b from the receiver circuitry 112, extract navigational data from the transmission signals 101a, 101b, store extracted navigational data in memory 116, and determine a position of the receiving device 110c based on the extracted navigational data. The determined position of the receiving device 110c may be time-stamped and stored in memory. It is noted herein that the various processes and/or navigational computations carried out by the controller 114 to determine the position of the receiving device 110 may be dependent upon the amount and/or type of navigational data encoded within the transmission signals 101a, 101b.

In additional and/or alternative embodiments, the one or more receiving devices 110 which are enabled and/or authorized for navigation (e.g., receiving devices 110b, 110c) may be further configured to extract communication data from the transmission signals 101a, 101b and store extracted communication data in memory 116. It is noted herein that various receiving devices 110a, 110b, 110c may be configured to extract navigational data and/or communication data dependent upon the mission or operational parameters of each respective receiving device 110a, 110b, 110c (e.g., navigation only, communication only, both navigation and communication, and the like).

For example, some receiving devices 110c may be authorized to receive and extract both the navigational data and the communication data. In this example, the receiving devices 110c may be configured to extract communication data encoded with a first set of encryption operations via a first encryption key, and extract navigational data encoded with a second set of encryption operations via a second encryption key different from the first encryption key. By way of another example, some receiving devices 110a may not be authorized to receive/extract the communication data such that the receiving devices 110a are authorized to receive and extract only the navigational data. In this example, the receiving devices 110a may be configured to extract navigational data encoded with a first set of encryption operations via a first encryption key, and extract navigational data encoded with a second set of encryption operations via a second encryption key different from the first encryption key.

It is contemplated herein that encoding navigational data within the transmission signals 101a, 101b via amplitude-modulation operations may have only negligible impacts on existing communication streams. In particular, it has been found that the addition of a navigational data stream may result in only slight reductions in average transmit powers, and small impacts to maximum transmission range. In this regard, currently-enabled communication only receiving devices 110b may continue to operate without significant disruption. However, when these negative effects of the navigational data stream may not be tolerated, it is contemplated herein that the navigational system 100 may adjust accordingly. In embodiments, the navigation system 100 may be configurable to enable and/or disable navigational capabilities. In particular, navigational capabilities may not be necessary when there is sufficient GPS navigational coverage, or when there are otherwise no receiving devices 110 in range which require encoded navigational data to determine their position. Furthermore, it may be desirable to disable the navigational capabilities of the navigational system 100 when communication data within the communication channel must be prioritized.

Accordingly, in some embodiments, the one or more transmitting devices 102a, 102b may be configured to identify one or more control signals indicative of a "communication-only" operational state. As it is used herein, the term "communication-only" operational state may refer to an operational state of the transmitting device 102a, 102b where navigational data is not encoded within the transmission signals 101a, 101b, such that only the communication data stream is transmitted within the transmission signals 101a, 101b during the "communication-only" operational state. In embodiments, the one or more transmitting devices 102a, 102b may be further configured to terminate the one or more amplitude-modulation operations in response to the one or more identified control signals.

It is contemplated herein that the one or more control signals indicative of the communication-only operational state may be generated manually and/or automatically according to any techniques known in the art. For example, a user may manually input the control signals indicative of the communication-only operational state via a user interface communicatively coupled to a transmitting device 102a, 102b. By way of another example, upon receiving and encoding communication data which is designated as "high-priority," a controller of a transmitting device 102a, 102b may generate one or more control signals indicative of a communication-only operational state.

As noted previously herein, it is contemplated herein that embodiments of the present disclosure may be used to enable new functionality to existing FSBS transmitters at relatively low cost. Additionally, due to the fact that navigational capabilities may be turned on and off as required, embodiments of the present disclosure may be implemented without a public announcement or tedious implementation procedures. Finally, because embodiments of the present disclosure may be used to enable navigational solutions without significantly affecting existing receiving devices (e.g., FSBS receivers), the navigational data of the present disclosure may be transmitted freely and used only by receiving devices 110 which have been authorized and instructed to search for the navigational data.

In embodiments, each transmitting device 102a, 102b and/or receiving device 110 may include a controller (e.g., controller 114). The controller 114 provides processing functionality for at least the respective device (e.g., transmitting device 102, receiving device 110) and can include any number of processors, micro-controllers, circuitry, field programmable gate array (FPGA) or other processing systems, and resident or external memory for storing data, executable code, and other information accessed or generated by the respective device (e.g., transmitting device 102, receiving device 110). The controller 104 can execute one or more software programs embodied in a non-transitory computer readable medium (e.g., memory 116) that implement techniques described herein. The controller 104 is not limited by the materials from which it is formed or the processing mechanisms employed therein and, as such, can be implemented via semiconductor(s) and/or transistors (e.g., using electronic integrated circuit (IC) components), and so forth.

In embodiments, each transmitting device 102a, 102b and/or receiving device 110a, 110b, 110c may include a memory (e.g., memory 116). The memory 116 can be an example of tangible, computer-readable storage medium that provides storage functionality to store various data and/or program code associated with operation of respective device (e.g., transmitting device 102, receiving device 110) and/or controller 114, such as software programs and/or code segments, or other data to instruct the controller 114, and possibly other components of each respective device (e.g., transmitting device 102, receiving device 110), to perform the functionality described herein. Thus, the memory 116 can store data, such as a program of instructions for operating the respective device (e.g., transmitting device 102, receiving device 110), including its components (e.g., controller 114, receiver circuitry 112, antenna matching network 106, driver circuit 108, etc.), and so forth. It should be noted that while a single memory 116 is described, a wide variety of types and combinations of memory (e.g., tangible, non-transitory memory) can be employed. The memory 116 can be integral with the controller 114, can comprise stand-alone memory, or can be a combination of both. Some examples of the memory 116 can include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

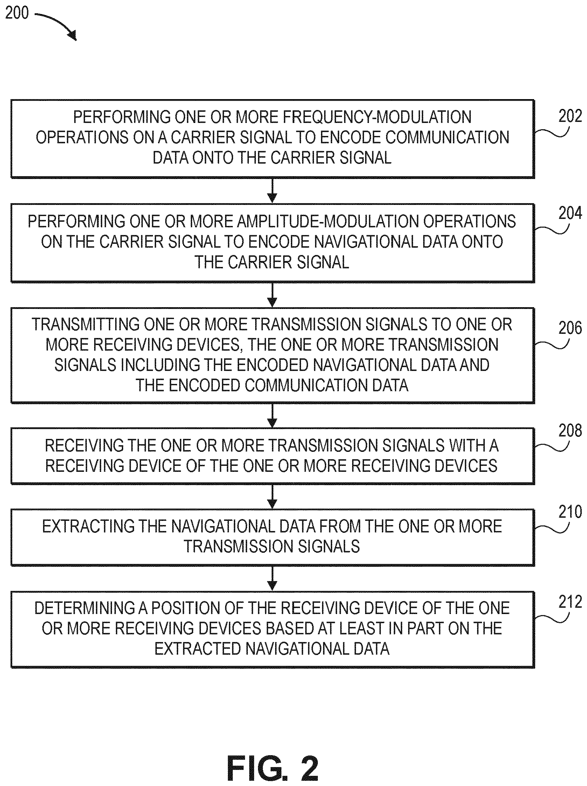

FIG. 2 illustrates a flowchart of a navigational method 200, in accordance with one or more embodiments of the present disclosure. It is noted herein that the steps of method 200 may be implemented all or in part by navigation system 100. It is further recognized, however, that the method 200 is not limited to the navigation system 100 in that additional or alternative system-level embodiments may carry out all or part of the steps of method 200.

In a step 202, one or more frequency-modulation operations are performed on a carrier signal to encode communication data onto the carrier signal. The one or more transmitting devices 102a, 102b may be configured to perform one or more frequency-modulation operations on a carrier signal in order to encode communication data onto the carrier signal. For example, the transmitting devices 102a, 102b may be configured to perform one or more frequency-shift keying (FSK) modulation operations in order to encode communication data onto the carrier signal. For instance, in the context of FSBS transmitters (e.g., transmitting devices 102a, 102b), the FSBS transmitters may be configured to perform one or more minimum shift keying (MSK) modulation operations in order to encode communication data onto the carrier signal. It is noted herein that any frequency-modulation operations (e.g., constant-level modulation operations) known in the art may be used in order to encode communication data to a carrier signal.

In a step 204, one or more amplitude-modulation operations are performed on the carrier signal to encode navigational data onto the carrier signal. The one or more transmitting devices 102a, 102b may be further configured to encode navigational data stream (e.g., navigational channel) onto the one or more transmission signals 101a, 101b via one or more amplitude-modulation operations in order to support navigational solutions at the receiving devices 110. As noted previously herein, the navigational data encoded into the transmission signals 101a, 101b may include a variety of types of navigational data which may be used by the receiving devices 110 to determine a navigational solution. For example, the navigational data encoded into the transmission signals 101a, 101b may include, but is not limited to, time-of-transmit values of the one or more transmission signals 101a, 101b, positional data of the one or more transmitting devices 101a, 101b, an operational mode of the one or more transmitting devices 101a, 101b, GPS almanac data, and the like.

As noted previously herein, performing the one or more amplitude-modulation operations on the carrier signal in step 204 may include performing the amplitude-modulation operations directly on an un-modulated carrier signal and/or indirectly on the carrier signal via an envelope of the frequency-modulated carrier signal, as modified in step 202. For example, in some embodiments, performing the one or more amplitude-modulation operations on the carrier signal in step 204 may include performing the one or more amplitude-modulation operations directly on an un-modified (e.g., un-modulated carrier signal). For instance, in some embodiments, the amplitude-modulation operations in step 204 may be performed on a carrier signal prior to the frequency-modulation operations in step 202. By way of another example, in some embodiments, performing the one or more amplitude-modulation operations on the carrier signal in step 204 may include performing the one or more amplitude-modulation operations on a carrier signal which has been modulated according to step 202. In this example, the one or more amplitude-modulation operations are performed on an envelope of the modulated carrier signal (e.g., FSK envelope, MSK envelope).

In a step 206, one or more transmission signals are transmitted to one or more receiving devices. In embodiments, the one or more transmission signals include the encoded communication data and the encoded navigational data. As noted previously herein, the transmitting devices 102a, 102b may be configured to transmit the transmission signals 101a, 101b at a frequency in the range of 3-300 kHz.

In a step 208, the one or more transmission signals are received by a receiving device of the one or more receiving devices. For example, the one or more receiving devices 110 may be configured to receive the one or more transmission signals 101a, 101b via receiver circuitry 112. The receiver circuitry 112 may include any receiver circuitry known in the art for receiving and/or transmitting signals including, but not limited to, antennas, receivers, transceivers, and the like.

In a step 210, the navigational data is extracted from the one or more transmission signals. For example, the controller 114 of a receiving device 110 may be configured to extract the navigational data from the one or more transmission signals 101a, 101b, and store the extracted navigational data in memory 116. The controller 114 may be configured to extract the navigational data using any encryption key or demodulation processes known in the art.

In a step 212, a position of the receiving device of the one or more receiving devices is determined based at least in part on the extracted navigational data. The determined position of the receiving device 110 may be time-stamped and stored in memory. It is noted herein that the various processes and/or navigational computations carried out by the controller 114 to determine the position of the receiving device 110 may be dependent upon the amount and/or type of navigational data encoded within the transmission signals 101a, 101b.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A navigation system comprising:
one or more transmitting devices (102) configured to:
generate one or more transmission signals (101) by:
performing one or more frequency-modulation operations on a carrier signal to encode communication data onto the carrier signal; and
performing one or more amplitude-modulation operations on the carrier signal to encode navigational data onto the carrier signal; and
transmit the one or more transmission signals to one or more receiving devices (110),
wherein a receiving device of the one or more receiving devices is configured to extract the navigational data from the one or more transmission signals and determine a position of the receiving device based at least in part on the extracted navigational data.

2. The navigation system of Claim 1, wherein performing the one or more amplitude-modulation operations on the carrier signal to encode navigational data onto the carrier signal comprises:
selectively modifying an amplitude of the carrier signal with one or more driver circuits of the one or more transmitting devices.

3. The navigation system of Claim 1, wherein performing the one or more amplitude-modulation operations on the carrier signal to encode navigational data onto the carrier signal comprises:
selectively modifying an amplitude of the carrier signal with an antenna matching network of the one or more transmitting devices.

4. The navigation system of Claim 3, wherein selectively modifying an amplitude of the carrier signal with an antenna matching network of the one or more transmitting devices comprises at least one of:
selectively activating an attenuator of the antenna matching network to selectively modify the amplitude of the carrier signal; or
selectively detuning the one or more transmitting devices with the antenna matching network to selectively modify the amplitude of the carrier signal.

5. The navigation system of any preceding Claim, wherein transmitting the one or more transmission signals comprises:
transmitting the one or more transmission signals at a frequency in the range of 3-300 kHz.

6. The navigation system of any preceding Claim, wherein the one or more frequency-modulation operations comprise a minimum-shift keying, MSK, modulation operation.

7. The navigation system of any preceding Claim, wherein the navigational data includes time-of-transmit values of the one or more transmission signals.

8. The navigation system of Claim 7, wherein the navigational data further includes at least one of positional data of the one or more transmitting devices, an operational mode of the one or more transmitting devices, or Global Positioning System, GPS, almanac data.

9. The navigation system of any preceding Claim, wherein performing one or more amplitude-modulation operations on a carrier signal to encode navigational data onto the carrier signal comprises:
performing one or more amplitude-modulation operations on an envelope of a modulated carrier signal generated via the one or more frequency-modulation operations.

10. The navigation system of any preceding Claim, wherein performing one or more frequency-modulation operations on a carrier signal to encode communication data onto the carrier signal comprises:
performing one or more frequency-modulation operations on an envelope of a modulated carrier signal generated via the one or more amplitude-modulation operations.

11. The navigation system of any preceding Claim,
wherein the navigational data is encoded onto the carrier signal via one or more encryption operations.

12. The navigation system of any preceding Claim,
wherein the communication data is encoded at a rate between 100-300 bits per second, BPS, and
wherein the navigational data is encoded at a rate between 0.1-1 BPS.

13. The navigation system of any preceding Claim, wherein the one or more transmitting devices comprise a fleet submarine broadcast system (FSBS) transmitter.

14. The navigation system of any preceding Claim, wherein the one or more transmitting devices are further configured to:
identify one or more control signals indicative of a communication-only operational state; and
terminate the one or more amplitude-modulation operations in response to the one or more identified control signals, wherein the one or more transmission signals transmitted during the communication-only operational state do not include the navigational data.

15. A navigational method comprising:
performing one or more frequency-modulation operations on a carrier signal to encode communication data onto the carrier signal;
performing one or more amplitude-modulation operations on the carrier signal to encode navigational data onto the carrier signal;
transmitting one or more transmission signals to one or more receiving devices, the one or more transmission signals including the encoded navigational data and the encoded communication data;
receiving the one or more transmission signals with a receiving device of the one or more receiving devices;
extracting the navigational data from the one or more transmission signals; and
determining a position of the receiving device of the one or more receiving devices based at least in part on the extracted navigational data.
